# EUROPEAN PATENT APPLICATION

(11) **EP 4 768 866 A1**
(43) Date of publication of application: **01.07.2026**
(21) Application number: 24223371.6
(22) Date of filing: 27.12.2024
(51) Int. Cl.: G01C 21/36

(54) **METHOD AND SYSTEM FOR DISPLAYING CONTINUOUS NAVIGATION INFORMATION**

(71) Applicant: TomTom International B.V., 1011 AC Amsterdam (NL); TomTom Global Content B.V., 1011 AC Amsterdam (NL); TomTom Navigation B.V., 1011 AC Amsterdam (NL)
(72) Inventor: JANSSEN, Arjan Adrianus Martinus Gijsbertus, 1011 AC Amsterdam (NL); TER-AVAKYAN, Eugene, 1011 AC Amsterdam (NL); IMBERTI, Filippo, 1011 AC Amsterdam (NL); SCHOUTEN, Paul, 1011 AC Amsterdam (NL)
(74) Representative: Bardehle Pagenberg Partnerschaft mbB Patentanwälte Rechtsanwälte

(57) **Abstract**

Described herein is a computer-implemented method for providing continuous navigation information using a map display of a digital map during a drive of a vehicle along a route.

The method comprises: obtaining a position related to a position of the vehicle and continuous transitioning a view of the map display from a first view to a second view, the second view configured to show the lane-level data for the continuous navigation information. The continuous transitioning is initiated based on a first distance between the position and a manoeuvre point for the drive of the vehicle.

## Description

### Field of the disclosure

Described herein are a computer-implemented method for providing continuous navigation information using a map during a drive of a vehicle along a route, a system comprising at least one processing unit configured to perform said method, a corresponding computer program and a vehicle comprising said system and and/or a computer to carry out said method.

### Technical background

Providing drivers of a vehicle and/or the vehicle itself with digital information, e.g., map information, during a drive is at the heart of driver assistance technology. Traditional road navigation systems often employ a distinct map view, providing an overview of the surroundings, alongside additional guidance features that offer more detailed information on lane-level navigation. However, these solutions often involve abrupt transitions between different views, disrupting the driver's experience and creating visual discontinuities.

The rendering of views in current implementations typically involves a sudden switch from a road-level representation to a more detailed lane-level view, or vice versa. Often, lane-level views are added to the road-level view. Such abrupt changes often accompanied by a jarring shift in the driver's visual focus, as the system abruptly updates the display to provide additional information on lane-level guidance.

Furthermore, the calculation of views in existing navigation systems can be problematic due to the need for rapid rendering and updating of multiple levels of detail, potentially increasing complexity of the data processing. Consequently, the transition between road-level and lane-level views is often discontinuous, marred by artifacts, etc., such as flicker or lag, which can degrade the overall driver experience.

It is therefore an objective of the present disclosure to overcome these limitations at least in part by providing a more seamless and intuitive navigation system through innovative techniques for calculating and rendering views.

These shortcomings in existing road navigation systems highlight a need for improved integration of visual cues, ensuring that drivers receive clear, concise guidance at all times.

### Summary

In a first embodiment, a computer-implemented method for providing continuous navigation information using a map display of a digital map during a drive of a vehicle along a route, is provided. The method comprises: obtaining a position related to a position of the vehicle and continuous transitioning a view of the map display from a first view to a second view, the second view configured to show the lane-level data for the continuous navigation information. The continuous transitioning is initiated based on a first distance between the position and a manoeuvre point for the drive of the vehicle.

The method may further comprise: obtaining lane-level data for a first segment of the route on the map and/or obtaining road-level data for a second segment of the route on the map.

The position may be related to the position of the vehicle. For example, it may a global positioning system, GPS, position or a similar information, for example obtained by a sensor and/or receiver. Such a sensor and/or receiver may be connected to the vehicle or be part of the vehicle. In other embodiments, such a sensor may be part of a device, for example a smartphone. The device may be within the vehicle and/or attached to the vehicle. In such examples, the position information of the device is at least for some time related to the position of the vehicle, for example while the device is located within the vehicle. The position information may be based on multiple sources of data, for example based on data from GPS systems, camera data etc.; the position may be in the form of coordinates on the digital map. In other examples, the position may be in the form of coordinates and additional information. Additional information may comprise such information as a lane index which may indicate the lane in which the vehicle is currently driving. The lane index may in addition or alternatively define how many lanes are available at a present position or a future position or at a plurality of positions of the digital map, for example along the route. The lane index may be determined based on camera data.

The view may be presented on a display, for example by rendering the view of the digital map on a screen of a computer display or a display device.

The method may allow improved navigation accuracy and driver experience through the use of continuous transitioning and lane-level data display, thereby the method may assist the driver in controlling and navigating the vehicle by this guided human-machine interaction process. Namely, the method may allow to calculate views and/or renderings to provide drivers relevant information about their route in real-time, facilitating safer and more efficient driving as the vehicle approaches a manoeuvre point such as a multi-lane highway bifurcation. This will be further detailed below.

The method may further comprise: transitioning the view from the second view to the first view, the first view configured not to show the lane level data for the continuous navigation information,
wherein the transitioning is initiated based on a second distance between the position and the manoeuvre point for the drive of the vehicle.

The transitioning, for example the transitioning the view from the second view to the first view, may be a continuous transitioning.

This may allow an additional step of transitioning back to the first view, which does not display lane-level data. This transition may be triggered when the vehicle reaches a certain second distance from the manoeuvre point. For example, after the vehicle has successfully conducted the manoeuvre at the manoeuvre point, the more detailed view may no longar be required. The system may then gradually transition back to a view that only utilizes road-level data and provides an overview and potentially reduces the computational load of the method as less data may be required to determine the view.

This may allow for a smoother and more intuitive navigation information presentation, potentially reducing driver distraction and improving overall driver experience. By dynamically adjusting the level of detail displayed on the map display, the system may better match the driver's needs at different stages of their journey, such as when approaching a complex intersection or leaving a motorway. This may lead to improved safety and efficiency in navigation systems, enhancing the overall driving experience for drivers.

The first view may be based on a first layer of data of the digital map and the second view may be based on a second layer of data of the digital map, wherein the second layer of data comprises road-level data and wherein at least part of the road-level data is not included in the first layer of data and wherein the continuous transitioning comprises gradually adding the navigation information from the second layer of data to the map display.

During the transition between the two views, this may allow for the gradual addition of navigation information from the more detailed layer to the view, providing a smoother display of increasing detail. For example, as the vehicle approaches a complex intersection, the system may gradually add road-level data, such as lane markings and turn instructions. This may reduce cognitive load for a driver. By selectively adding detailed data, the system can adapt to changing driving situations, providing drivers with more relevant and actionable information. This, in turn, may lead to improved safety and efficiency in navigation systems.

The first view may be is based on a first data set of the digital map and the second view may be based on a second data set of the digital map and wherein the continuous transitioning may comprise blending between information from the first data set and information from the second data set.

For example, as the vehicle approaches a complex intersection, the system may blend information from a general road map with detailed lane-level data to create a comprehensive view of the surroundings. This may enable a more sophisticated and adaptive presentation of navigation information, potentially reducing driver distraction and improving overall driver experience. By blending information from multiple data sets, the system can create a dynamic and context-dependent display that better meets the needs of the driver at different stages of their journey, leading to improved safety and efficiency in navigation systems. The continuous transitioning may reduce distractions for the driver. Blending between information from the first data set and information from the second data set may simplify the implementation, for example of the rendering of the view and result in reduced resource use.

The computer-implemented method may further comprise determining a position for a vehicle position marker on the map display, the vehicle position marker indicating a lane position of the vehicle with respect to the lane-level data.

This may allow the driver to see their exact position within lanes and navigate more precisely. For example, as the vehicle approaches an intersection, the system may display a marker indicating the vehicle's position within its lane, helping the driver understand their spatial relationship to the surrounding environment. The vehicle position marker can be continuously used in the first and second view. This may reduce distractions for the driver and reduce system resources.

This may increase accuracy and clarity of navigation information, potentially reducing the risk of accidents caused by misjudging lane positioning or navigating through complex intersections. By providing drivers with a precise indication of their lane position, the system can help improve safety and reduce driver stress.

The computer-implemented method may further comprise obtaining an uncertainty of the position related to the position of the vehicle. The method may further comprise based on the position related to the position of the vehicle and the uncertainty: determining the position of the vehicle position marker on the map display.

This may allow the method to take into account the uncertainty of the position. For example, GPS data may not be accurate enough to provide a lane position. In other examples, the position may be known more accurately, for example by fusion of data from GPS systems, camera data etc. In such examples, the uncertainty of the position may be lower than in cases were only one source of position data, for example GPS, is used. Taking into account the uncertainty of the position when determining the vehicle position marker may contribute to a continuous presentation to the driver, for example by moving the vehicle position marker continuously towards a position on the route on the map display, for example in the center of a lane which the driver should drive on. In other examples, the uncertainty may be less, so that the position of the position marker on the map display may be the actual position of the vehicle, for example in the case of lane level data the actual lane the vehicle is currently positioned in.

The computer-implemented method may further comprise: if the uncertainty of the position related to the position of the vehicle is smaller than a first threshold: determining the position of the vehicle position marker on the map display with respect to a corresponding lane from the lane-level data.

When the uncertainty of the position is below a certain threshold, potentially indicating high accuracy, the vehicle position marker may be displayed at a specific location within the corresponding lane that corresponds to the estimated position. A threshold may be the width of a lane of the current section of the route, for example a highway lane width, a city lane width etc.

If the threshold is selected lower, for example 70% of a lane width or 50% of a lane width etc., f the vehicle is estimated to be within a certain section of a lane, the vehicle position marker may be shown at a precise point on the map display corresponding to that section.

This may contribute to providing continuous navigation information when the underlying data suggests high accuracy of the position. By tying the displayed position to specific locations within lanes, this approach enables drivers to better understand their surroundings and make more informed decisions about navigation and maneuvering.

The lane-level data may further comprise at least one first lane which is on the route and optionally at least one second lane which is not on the route.

This may allow indicating to the driver which lanes are the correct lanes to select for driving. In particular in complex manoeuvre situations at a first manoeuvre two lanes a and b may be correct while in the subsequent manoeuvre lane a will require an additional lane change to lane b. In such situations, it may be beneficial for the driver to know that only lane b is on the route and lane a, as possible further lanes, are not on the route.

The computer-implemented method may further comprise: if the uncertainty of the position related to the position of the vehicle is larger than a second threshold: determining the position of the vehicle position marker on the map display in a predetermined location with respect to the at least one first lane.

The second threshold may be identical to the first threshold. In some embodiments, the second threshold may be less, for example slightly less, than the first threshold. It may also be different. The second threshold may indicate that the accuracy of the position is low. If this is taken into account, it is possible to provide more general indication of the vehicle's position when data quality is poorer. By displaying the vehicle position marker in a predetermined location that is less precise, but still informative, this approach allows drivers to maintain situational awareness even when positioning data is uncertain or unreliable. This can lead to improved safety and reduced driver frustration in situations where accurate positioning is challenging or impossible.

In such examples, the vehicle position marker on the map display may be placed in a predetermined location with respect to the at least one first lane which indicates where the vehicle should be - instead of the actual position. Thus, the driver may easily adapt the vehicle position to the correct position, for example the first lane or one of the first lanes.

The computer-implemented method may further comprise showing an indicator for the uncertainty of the position related to the position of the vehicle on the map display, wherein optionally a width of the indicator is determined based on the uncertainty.

The width of the indicator may be fixed. If the uncertainty of the position is smaller than a first threshold, no indicator for the uncertainty of the position on the map display may be shown. The first threshold may a lane width or a fraction of a lane width, for example 80%, for example 70%, for example 50%, for example 30%.

Such an absence of the indicator may thus inform a driver that the accuracy of the position is high. This may allow the driver to learn that the position is accurate on the lane level.

If the uncertainty of the position is at least the first threshold, the indicator for the uncertainty of the position on the map display may be shown. The indicator may have a fixed width. The presence of the indicator may thus signal to the driver that the lane-position is not known.

The width of the indicator may also be determined based on the uncertainty of the position. Also, further factors may be taken into account, for example the current road type the vehicle is in. This allows an adaptation to typical lane width for example for a city road or a highway road, a country road etc.

Showing an indicator for the uncertainty of the position on the map may provide a clear and transparent representation of positional uncertainty, enabling drivers to make more informed decisions about navigation and maneuvering. By providing an explicit visual cue for uncertainty, this approach can help reduce driver confusion, anxiety, or frustration when dealing with uncertain or unreliable positioning data.

The indicator may also be faded in and faded out as the view transitions between first view and second view. This may further contribute to providing continuous navigation information.

The first view may comprise at least one of the following: a first viewing angle and/or a first viewing zoom level. The second view may comprise at least one of the following: a second viewing angle, a second viewing zoom level.

The first viewing angle may be larger than the second viewing angle. The first viewing zoom level may be more zoomed out than the second viewing zoom level.

This may allow continuous navigation information using a map during a drive of a vehicle along a route using first and second view and allow for presentation of detailed information in the second view and larger overview in the first view.

The manoeuvre point may comprise at least one of the following: an exit of a motorway, a bifurcation of at least two highways, an intersection of at least two roads.

The first distance and/or the second distance may at least be partially determined based on at least one of the following: a type of road of the manoeuvre point and/or at the position, a velocity of the vehicle, a complexity of a manoeuvre to be carried out at the manoeuvre point, the manoeuvre point.

This may allow to provide continuous navigation information that are adopted to typical reaction times required based on the above factors. For example, if the car is moving slowly and/or the complexity of a manoeuvre is low, the second distance may be closer to the manoeuvre point. In other examples, if the complexity is high and/or the speed of the car is fast, the second distance may be further away from the manoeuvre point.

In a second embodiment, a system comprising at least one processing unit configured to perform the method according to the first embodiment is provided.

In a third embodiment, a computer program is provided. The computer program comprises instructions which, when the program is executed by a computer, cause the computer to carry out the method of the first embodiment.

In a fourth embodiment, a vehicle is provided. The vehicle comprises the system of the second embodiment and/or comprising a computer to execute the computer program of the third embodiment.

Whether aspects are implemented as hardware or software means depends upon the particular application and design constraints imposed on the overall system. By way of example, an element, or any portion of an element, or any combination of elements may be implemented as a processing system that may include one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more exemplary embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

It is noted that any combination of features that have been described above as belonging to certain embodiments/aspects of the present disclosure is also an embodiment of the present disclosure, provided such a feature combination is feasible, i.e., does not lead to any contradictions.

### Short description of the figures

In the following, exemplary embodiments are described with reference to the following figures:
Fig. 1a shows a view of a map display according to an embodiment.
Fig. 1b shows a view of a map display according to an embodiment.
Fig. 2 shows a schematic diagram of a first view and a second view according to an embodiment.
Fig. 3 shows a schematic diagram of a digital map with a manoeuvre point according to an embodiment.
Fig. 4a shows a vehicle position marker according to an embodiment.
Fig. 4b shows a vehicle position marker according to an embodiment.

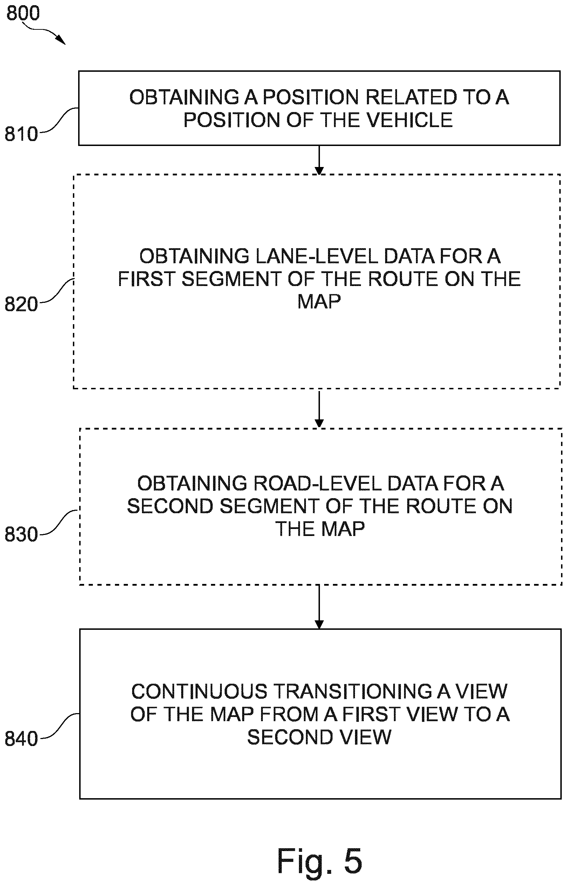

Fig. 5 shows a method according to an embodiment.

### Detailed description of preferred embodiments

Providing drivers of a vehicle and/or the vehicle itself with digital information, e.g., map information, during a drive is at the heart of driver assistance technology.

Traditional road navigation systems often employ a distinct map view, providing an overview of the surroundings, alongside additional guidance features that offer more detailed information on lane-level navigation. However, these solutions often involve abrupt transitions between different views, disrupting the driver's experience and creating visual discontinuities. This is at least in part overcome by the present disclosure.

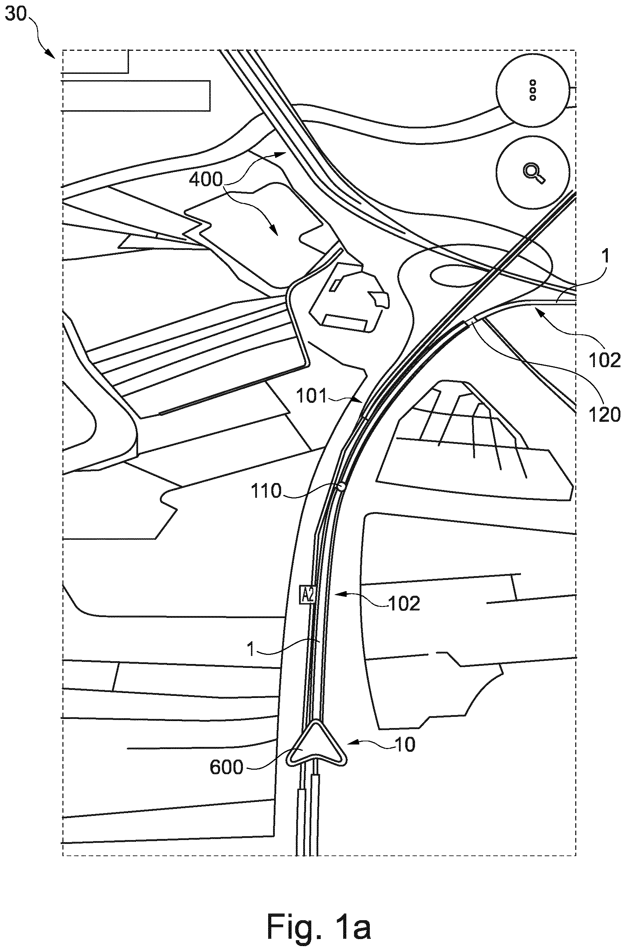

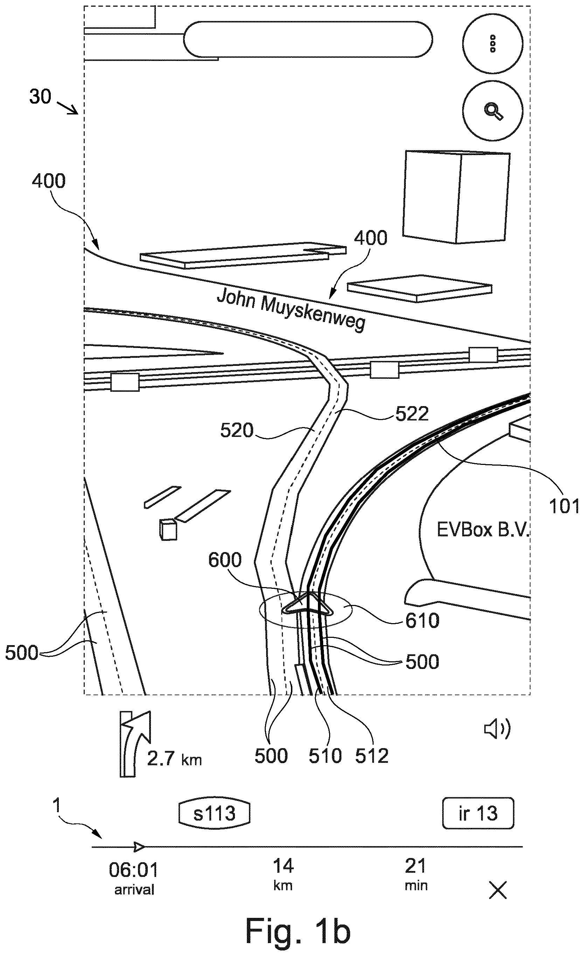

Fig. 1a and Fig. 1b show views of a map according to embodiments. The different views will be explained with reference to the Fig. 8, which illustrates a method according to an embodiment.

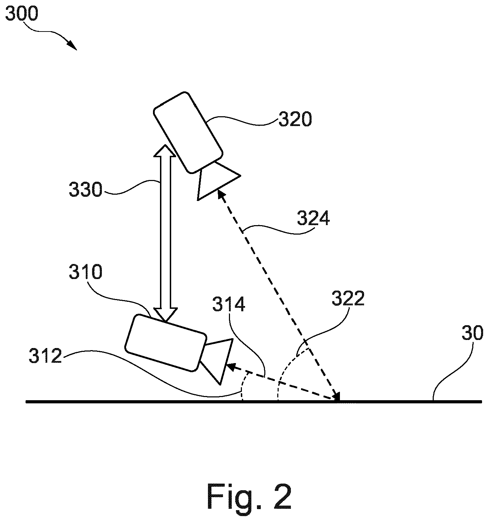

As shown in Fig. 8, but also independent, a computer-implemented method for providing continuous navigation information using a map display 30 of a digital map during a drive of a vehicle along a route 1 is provided. For example, the method may concern digital map 30 shown in both Fig. 1a and Fig. 2. The method may comprise:
Obtaining, in 810 of Fig. 8, a position 10 related to a position of the vehicle. As discussed herein, the position may be a GPS position or the like. The position may be directly measured by the vehicle itself, or by a device which is carried in or attached to the vehicle, for example a smart phone. If the device and the vehicle move together, a position determined by the device is related to the vehicle. In other examples, other means for determining the position may be used, for example camera data, Wi-Fi data, cell phone data etc. in isolation or in combination with each other to determine and/or obtain the position.

As shown in optional step 820 of Fig. 8, the lane-level data 500 for a first segment 101 of the route 1 on the map display 30 may be obtained.

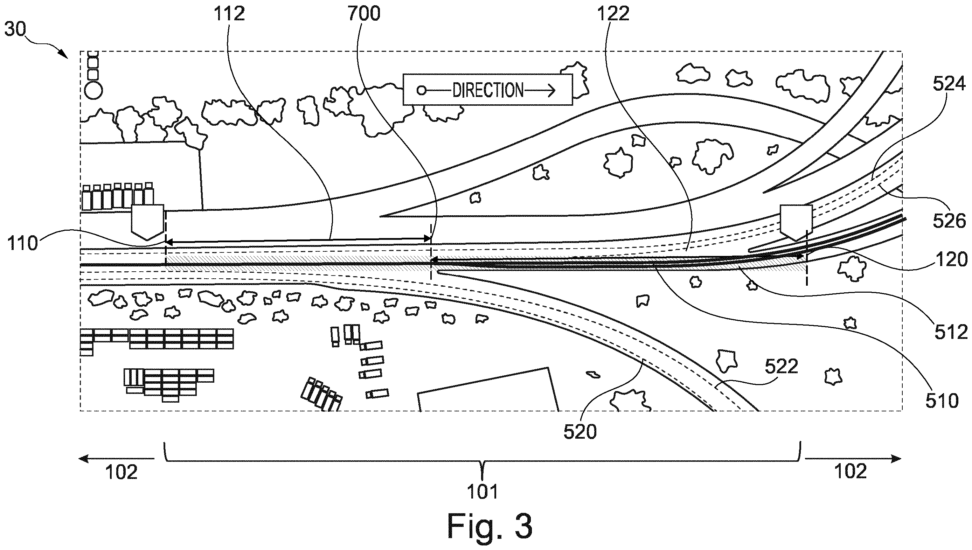

A first example for a first segment 101 is shown in Fig. 1a. The first segment 101 of Fig. 1a is also shown in Fig. 1b. Fig. 3 shows a schematic view of a digital map which may be displayed in map display 30, for example map display 30 of Fig. 1a and/or Fig. 1b. Here, a different first segment 101 is indicated at the bottom.

As shown in optional step 830 in Fig. 8, the method may further comprise: obtaining road-level data 400 for a second segment 102 of the route 1 on the digital map. Examples for obtaining road-level data 400 for a second segment 102 of the route 1 are shown in Fig. 1a.

As shown in Fig. 1a, the second segment 102 may be interrupted by the first segment 102. However, more complex relationships between first and second segment are possible. In some embodiments, a simpler relationship may exist, for example only a first segment connected to a single segment or vice versa may be used.

As shown in Fig. 8, the method may further comprise continuous transitioning 840, 330 a view 300 of the digital map 30 from a first view 320 to a second view 310.

Here Fig. 1a shows an example for a first view, Fig. 1b shows an example for a second view.

The continuous transitioning is illustrated schematically in Fig. 2. Namely, Fig. 2 shows how the view 300 of the digital map 30 may change over time. As indicated by the arrow in Fig. 2, the view 300 may continuously transition from a first view 320 to a second view 310.

As illustrated in Fig. 2 and shown in the examples of Fig. 1a and Fig. 1b, the first view 320 may comprise a first viewing angle 322 and/or a first viewing zoom level 324. The second view 310 may comprise a second viewing angle 312 and/or a second viewing zoom level 314.

As illustrated in Fig. 2 and shown in the examples of Fig. 1a and Fig. 1b, the first viewing angle 322 may be larger than the second viewing angle 310. The first viewing zoom level 324 may be more zoomed out than the second viewing zoom level 314.

Such first view and second view may allow to optimize the information available to a driver and/or may optimize the amount of data required to present the view of the map.

The second view 310 may be configured to show the lane-level data 500 for the continuous navigation information, as for example illustrated in Fig. 1b.

The continuous transitioning, see 840 in Fig. 8 and 330 in Fig. 3, may be initiated based on a first distance 112 between the position 10 and a manoeuvre point 700 for the drive of the vehicle.

For example, as illustrated in Fig. 3, once the position related to the vehicle is a first distance 112 away from the manoeuvre point 700, the continuous transitioning may be carried out. In some examples, the continuous transitioning is started once the position related to the vehicle is a first distance 112 away from the manoeuvre point 700. In Fig. 3, this location is indicated as position 110.

The method may thus allow improved navigation accuracy and driver experience through the use of continuous transitioning and lane-level data display. The method may allow to calculate views and/or renderings to provide drivers relevant information about their route in real-time, facilitating safer and more efficient driving as the vehicle approaches a manoeuvre point such as a multi-lane highway bifurcation. Notably, hard cuts in the experience may be provided.

In some embodiments, the method further further comprises transitioning 330 the view 300 from the second view 310 to the first view 320, the first view 320 configured not to show the lane level data 500 for the continuous navigation information. As illustrated in Fig. 3, the view may move back to the first view.

This is also illustrated in the examples of Fig. 1a and Fig. 1b. As shown, Fig. 1b shows lane level data in a zoomed-in view, allowing a better detailed view of the environment and more details. Fig. 1a does not show lane-level data and has a more zoomed-out view of digital map 30, allowing a better overview and less details.

As shown in Fig. 3, the continuous transitioning may be initiated based on a second distance 122 between the position 10 and the manoeuvre point 700 for the drive of the vehicle. In Fig. 3, this location is indicated as position 120.

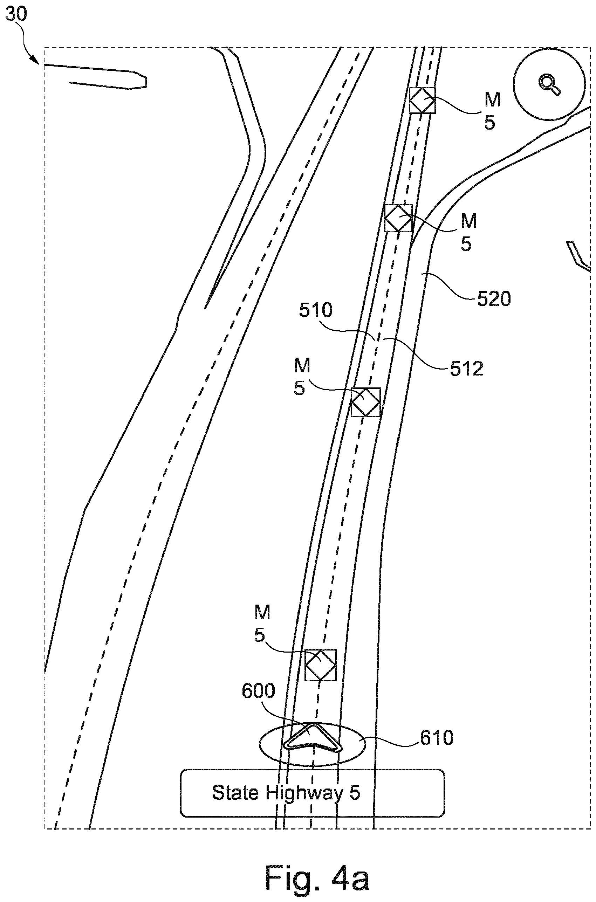

The manoeuvre point 700 comprises at least one of the following: an exit of a motorway, as for example shown in Fig. 4a, a bifurcation of at least two highways as shown in Fig. 3, an intersection of at least two roads. Many other manoeuvre points 700 are known in the art.

In some embodiments, the first distance and/or the second distance is at least partially determined based on at least one of the following: a type of road of the manoeuvre point 700 and/or at the position 10, a velocity of the vehicle, a complexity of a manoeuvre to be carried out at the manoeuvre point 700, the manoeuvre point 700.

This may allow to provide sufficient time for the drive to carry out the manoeuvre.

As illustrated in Fig. 1a and Fig. 1b, the first view 320 may be based on a first layer of data of the digital map 30 and the second view 310 may be based on a second layer of data of the digital map 30. The second layer of data may comprise the road-level data 400 and wherein at least part of the road-level data may not be included in the first layer of data. This may reduce the complexity for the driver and may also allow less computational resources required during extended periods of the drive.

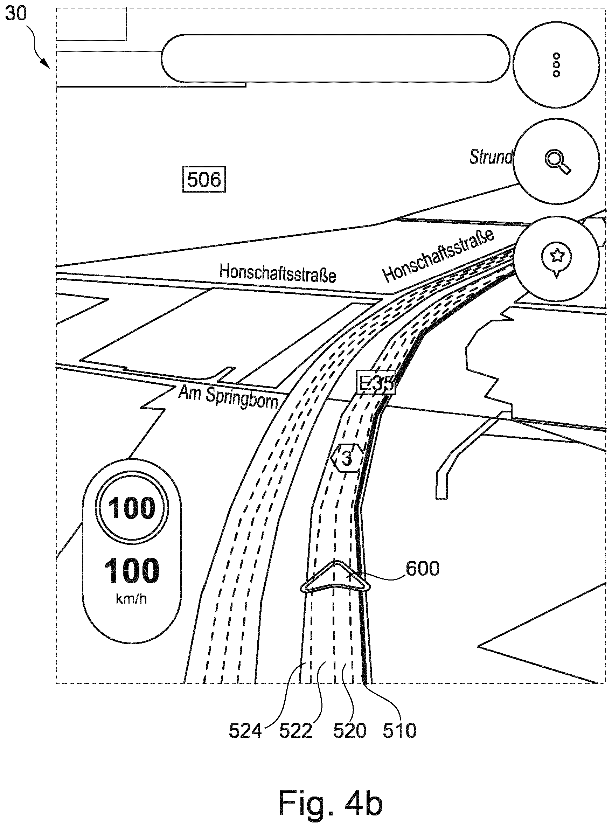

The continuous transitioning may comprise gradually adding the navigation information from the second layer of data in the view. For example, when performing continuous transitioning from Fig. 1a to Fig. 1b, the additional information shown in Fig. 1b of map display 30 may be faded in, to allow for a smooth and distraction free transition. Likewise, when back-transitioning, the additional information may be faded out and optionally be removed from memory to free resources. Further examples of additional information are shown in Fig. 4a, for example a sign indicating "State Highway 5" and markers M5 indicating the highway. Further, Fig. 4b shows different markers for different types of road, namely marker 3 and marker "E35" for an international E-road.

In another embodiment, the first view 320 is based on a first layer of data of the digital map and the second view 310 is based on a second layer of data of the digital map, wherein the second layer of data comprises the road-level data 400 and wherein at least part of the road-level data is not included in the first layer of data and wherein the continuous transitioning comprises gradually adding the navigation information from the second layer of data in the view.

This may provide an alternative way to organize the layer of data.

In some embodiments, the first view 320 is based on a first data set of the map and the second view 310 is based on a second data set of the map and wherein the continuous transitioning comprises blending between information from the first data set and information from the second data set.

Fig. 1a, Fig. 1b, Fig. 4a and Fig. 4b shows a vehicle position marker 600.

The method may comprise determining a position for a vehicle position marker 600 on the map display 30, the vehicle position marker 600 indicating a lane position of the vehicle with respect to the lane-level data 500.

The position for a vehicle position marker 600 on the map display 30 may be determined based on the position 10.

This is exemplarily shown in Fig. 1b, Fig. 4a, and Fig. 4b. Indicating a lane position of the vehicle with respect to the lane-level data 500 may simplify the navigation experience for the driver.

However, the position 10 may have an uncertainty, for example due to limited accuracy of the location determination means used, for example GPS.

In some embodiments, the method comprises obtaining an uncertainty of the position 10 and based on the position 10 and the uncertainty of the position: determining a position of a vehicle position marker 600 on the map.

This may allow the method to distinguish situations related to the uncertainty of the position, for example situations in which the location is more accurately known than the width of a lane width and situations in which the location is less accurately known.

In one embodiment, if the uncertainty of the position is smaller than a first threshold the method comprises: determining the position of the vehicle position marker 600 on the map in a predetermined position with respect to a lane from the lane-level data 500 in which the position is currently located.

This may allow to provide a position on the lane-level data, for example required for a rendering algorithm, even in cases in which this position is not well enough known, for example uncertain. In one example, in such situation the predetermined position may be in the center of all the lanes currently on the route.

Related, but also independently, the lane-level data 500 may further comprise at least one first lane, for example first lanes 510 and 512 shown in Fig. 4a, which is/are on the route 1 and optionally at least one second lane, for example second lane 520 shown in Fig. 4a or second lanes 520, 522, 524, 526 shown in Fig. 3 and Fig. 4b, which is/are not on the route 1.

An example is shown in Fig. 1b, in which the at least one first lane comprises lanes 510 and 512. In the example of Fig. 1b, the at least one first lane 510 and 512 is indicated as solid lines, but other ways of presentation are possible, for example highlighting of the lanes in different colors and/or greying out the lanes which are not the at least one first lane etc.

Related, but also independent, in one embodiment the method comprises: If the uncertainty of the position 10 is larger than or equal to a second threshold: determining the position of the vehicle position marker 600 on the map in a predetermined location with respect to the at least one first lane 510, 512.

For example, as shown in in Fig. 1b and in Fig. 4a, the predetermined location may be placed in the center of the at least one first lane, in this example in the center between first lanes 510 and 512. This may allow rendering a view telling the driver the desired position, so the driver can steer the vehicle into the correct lanes, in this case one of the first lanes 510 and 512.

In some examples, it may be desirable to provide an indication to the driver that the position shown is a desired position, not an actual position. This may help to avoid confusion.

For this reason, but also independently, in some embodiments as illustrated in Fig. 4a, the method further comprises showing an indicator 610 for the uncertainty of the position 10 on the map display 30, wherein optionally the indicator comprises a width. The width may be determined based on the uncertainty of the position. In other embodiments, the width may be fixed.

As shown in Fig. 4a, the indicator may have the appearance of a halo surrounding the vehicle position marker 600, but other ways for displaying the indicator are possible.

Indicator 610 may thus help raise awareness that the lane-level position is a desired position, not a current position. By using such an indicator 610 continuous navigation information may be provided while still communicating that the exact location is not known.

As shown in Fig. 4, if the actual position is known for example with with a low accuracy, the indicator may not be shown. Thus, the absence of the indicator shows to the driver that the position shown is the actual vehicle position. Therefore, in the example of Fig. 4b, the accurate position information, for example obtained from additional camera data from the vehicle, allows the driver to ergonomically see that the vehicle is not in the at least one first lane 510 on the route but instead in a position at the left end of lane 520.

In a second embodiment, a system comprising at least one processing unit configured to perform the method according to the first embodiment is provided.

Such a system may be realized in a distributed manner, for example including cloud computing. It may also be realized as an on-premises or single device solution.

In a third embodiment, a computer program is provided. The computer program comprises instructions which, when the program is executed by a computer, cause the computer to carry out the method of the first embodiment.

In a fourth embodiment, a vehicle is provided. The vehicle comprises the system of the second embodiment and/or comprising a computer to execute the computer program of the third embodiment.

## Claims

1. A computer-implemented method for providing continuous navigation information using a map display (30) of a digital map during a drive of a vehicle along a route (1), comprising:
obtaining (810) a position (10) related to a position of the vehicle, and continuous transitioning (840, 330) a view (300) of the map display (30) from a first view (320) to a second view (310), the second view (310) configured to show lane-level data (500) for the continuous navigation information,
wherein the continuous transitioning (840, 330) is initiated based on a first distance (112) between the position (10) and a manoeuvre point (700) for the drive of the vehicle.

2. The computer-implemented method of claim 1, further comprising:
transitioning (330) the view (300) from the second view (310) to the first view (320), the first view (320) configured not to show the lane level data (500) for the continuous navigation information,
wherein the transitioning is initiated based on a second distance (122) between the position (10) and the manoeuvre point (700) for the drive of the vehicle.

3. The computer-implemented method of claim 1 or claim 2,
wherein the first view (320) is based on a first layer of data of the digital map and the second view (310) is based on a second layer of data of the digital map,
wherein the second layer of data comprises road-level data and wherein at least part of the road-level data is not included in the first layer of data
and wherein the continuous transitioning comprises gradually adding the navigation information from the second layer of data to the map display (30).

4. The computer-implemented method of any of the previous claims, wherein the first view (320) is based on a first data set of the digital map and the second view (310) is based on a second data set of the digital map and wherein the continuous transitioning comprises blending between information from the first data set and information from the second data set.

5. The computer-implemented method of any of the previous claims, further comprising:
determining a position for a vehicle position marker (600) on the map display (30), the vehicle position marker (600) indicating a lane position of the vehicle with respect to the lane-level data (500).

6. The computer-implemented method of claim 5, further comprising:
obtaining an uncertainty of the position (10) related to the position of the vehicle,
based on the position (10) related to the position of the vehicle and the uncertainty: determining the position of the vehicle position marker (600) on the map display (30).

7. The computer-implemented method of claim 6, further comprising:
if the uncertainty of the position (10) related to the position of the vehicle is smaller than a first threshold: determining the position of the vehicle position marker (600) on the map display (30) with respect to a corresponding lane from the lane-level data (500).

8. The computer-implemented method of any of the previous claims, the lane-level data (500) further comprising:
at least one first lane (510, 512) which is on the route (1) and optionally at least one second lane (520, 522, 524, 526) which is not on the route (1).

9. The computer-implemented method of claim 6 and claim 8, further comprising:
if the uncertainty of the position (10) related to the position of the vehicle is larger than a second threshold: determining the position of the vehicle position marker (600) on the map display (30) in a predetermined location with respect to the at least one first lane (510, 512).

10. The computer-implemented method of any of claims 6, 7, and 9, further comprising:
showing an indicator (610) for the uncertainty of the position (10) related to the position of the vehicle, on the map display (30), wherein optionally a width of the indicator is determined based on the uncertainty.

11. The computer-implemented method of any of the previous claims, wherein the first view (320) comprises at least one of the following:
a first viewing angle (322), and/or
a first viewing zoom level (324), and/or
wherein the second view (310) comprises at least one of the following:
a second viewing angle (312), and/or
a second viewing zoom level (314).

12. The computer-implemented method of claim 11, wherein the first viewing angle (322) is larger than the second viewing angle (310) and/or the first viewing zoom level (324) is more zoomed out than the second viewing zoom level (314).

13. The computer-implemented method of any of the previous claims, wherein the manoeuvre point (700) comprises at least one of the following:
an exit of a motorway,
a bifurcation of at least two highways, and
an intersection of at least two roads.

14. The computer-implemented method of any of the previous claims, wherein the first distance and/or the second distance is at least partially determined based on at least one of the following:
a type of road of the manoeuvre point (700) and/or at the position (10),
a velocity of the vehicle,
a complexity of a manoeuvre to be carried out at the manoeuvre point (700), and
the manoeuvre point (700).

15. A system comprising at least one processing unit configured to perform the method according to any of claims 1 to 14.

16. A computer program comprising instructions which, when the program is executed by a computer, cause the computer to carry out the method of any of claims 1 to 14.

17. A vehicle, comprising the system of claim 14 and/or comprising a computer to execute the computer program of claim 16.
